# EUROPEAN PATENT APPLICATION

(11) **EP 3 905 029 A1**
(43) Date of publication of application: **03.11.2021**
(21) Application number: 21169928.5
(22) Date of filing: 22.04.2021
(51) Int. Cl.: G06F 8/34, G06F 9/451

(54) **SYSTEM FOR PROVIDING SOFTWARE DEVELOPMENT ENVIRONMENT, METHOD FOR PROVIDING SOFTWARE DEVELOPMENT ENVIRONMENT, AND NON-TRANSITORY COMPUTER READABLE MEDIUM**

(30) Priority: 27.04.2020 JP 2020078538
(71) Applicant: YOKOGAWA ELECTRIC CORPORATION, Musashino-shi Tokyo 180-8750 (JP)
(72) Inventor: ABE, Koh, Musashino-shi, Tokyo, 180-8750 (JP); PALANIRAJ, Alaguraja Pandian, Musashino-shi, Tokyo, 180-8750 (JP); TABATA, Hiroki, Musashino-shi, Tokyo, 180-8750 (JP)
(74) Representative: Winter, Brandl - Partnerschaft mbB

(57) **Abstract**

A system (10) for providing a software development environment includes a display (35) and a controller (31). The display (35) is configured to display a user interface (200) on which are placed a development component (301), a connector (310) connected to the development component (301), and a development component (303) to which the development component (301) is connectable by the connector (310). The controller (31) is configured to display the connector (310) and the development component (303) on the display (35) in an emphasized display form when a pointer (230) is positioned within a predetermined range from the development component (303) while the connector (310) is selected by the pointer (230).

## Description

### TECHNICAL FIELD

The present disclosure relates to a system for providing a software development environment, a method for providing a software development environment, and a non-transitory computer readable medium.

### BACKGROUND

Along with advances in technology pertaining to the Internet of Things (IOT), systems have been proposed for automatic control of various devices, sensors, and the like connected to a network in plants, factories, buildings, residences, and the like. For example, various systems (engineering systems) have been constructed in plants, factories, and the like, such as a distributed control system, a manufacturing execution system (MES), a plant information management system (PIMS), and an enterprise resource planning (ERP) system.

The development of software implemented in these engineering systems, such as applications, workflow, and programs, has been achieved using an apparatus installed in a plant, such as a programmable logic controller (PLC). Patent literature (PLT) 1, for example, proposes technology that, instead of installing a software development environment on a client terminal, accesses a server from the client terminal to enable coding of programs using the software development environment on the server.

### CITATION LIST

### Patent Literature

PTL 1: US8086664B2

### SUMMARY

In the technology of PTL 1, however, the program code under development needs to be edited using an editor provided by the server. The user interface of the editor is not necessarily very convenient. Furthermore, code needs to be written directly with the editor, thus requiring specialized knowledge and experience with programming languages and the like. This technology therefore does not enable all users to develop software easily. In other words, the user interface of the software development environment has room for improvement.

It would be helpful to provide a system for providing a software development environment, a method for providing a software development environment, and a non-transitory computer readable medium that can improve the convenience of the user interface of a software development environment.

A system for providing a software development environment according to an embodiment is a system for providing a software development environment to develop software by combining a plurality of development components and includes an information processing apparatus that includes a display and a controller. The display is configured to display a user interface on which are placed a first development component, a connector connected to the first development component, and a second development component to which the first development component is connectable by the connector. The controller is configured to display the connector and the second development component on the display in an emphasized display form when a pointer is positioned within a predetermined range from the second development component while the connector is selected by the pointer.

According to the system for providing a software development environment in an embodiment, an environment for developing software by combining a plurality of development components is thus provided. The connector, connected to the first development component, and the second development component are displayed with emphasis when the pointer is positioned within a predetermined range from the second development component while the connector is selected by the pointer. Accordingly, the user can easily recognize that the first development component and the second development component are connectable. In other words, the convenience of the user interface of a software development environment can be improved by the system for providing a software development environment in an embodiment.

In an embodiment, the second development component may include one or more ports having a shape corresponding to a shape of an end of the connector, the end may be connectable to the one or more ports, and in the display form, the end of the connector and one port among the one or more ports may be displayed with emphasis.

According to the system for providing a software development environment in an embodiment, the shapes of the end of the connector and the port of the second development component correspond and are thus displayed with emphasis when the pointer is positioned within a predetermined range from the second development component. This configuration enables the user to recognize more easily that the first development component and the second development component are connectable by the connector.

In an embodiment, the controller may be configured to display the end of the connector and a port to which the connector is not connectable on the display with emphasis in a different form than the display form when the pointer is positioned within a predetermined range from the port to which the connector is not connectable while the connector is selected by the pointer.

According to the system for providing a software development environment in an embodiment, the end of the connector and the port to which the connector is not connectable are thus emphasized with a different display form, enabling the user to recognize easily that the connector and the port are not connectable.

In an embodiment, a port to which the connector is not connectable may have a different shape from a port to which the connector is connectable.

According to the system for providing a software development environment in an embodiment, the shape of a port to which the connector is not connectable is thus different from the shape of a port to which the connector is connectable. The user can thereby easily recognize the development components to which a connector can and cannot be connected.

In the display form of an embodiment, the end and one port among the one or more ports may be displayed with emphasis in an identical color.

According to the system for providing a software development environment in an embodiment, the end of the connector and one port among the one or more ports are thus displayed with emphasis in an identical color, enabling the user to recognize more easily that the first development component and the second development component are connectable by the connector.

In an embodiment, the controller may be configured to connect and display, on the display, the first development component and the second development component using the connector when input of a connection instruction is received while the connector and the second development component are displayed in the display form.

According to the system for providing a software development environment in an embodiment, a connection instruction can thus be inputted during display in the emphasized display form. The user can therefore perform the corresponding operation while recognizing that the first development component and the second development component are connectable by the connector. This can improve convenience for the user. It suffices to input the connection instruction when the pointer is positioned within a predetermined range from the second development component. The user therefore does not need to match the pointer precisely to the connection position of the second development component. This can improve operability for the user.

A method for providing a software development environment according to an embodiment is a method for providing a software development environment to develop software by combining a plurality of development components and includes displaying a user interface on which are placed a first development component, a connector connected to the first development component, and a second development component to which the first development component is connectable by the connector, and displaying the connector and the second development component in an emphasized display form when a pointer is positioned within a predetermined range from the second development component while the connector is selected by the pointer.

According to the method for providing a software development environment in an embodiment, an environment for developing software by combining a plurality of development components is thus provided. The connector, connected to the first development component, and the second development component are displayed with emphasis when the pointer is positioned within a predetermined range from the second development component while the connector is selected by the pointer. Accordingly, the user can easily recognize that the first development component and the second development component are connectable by the connector. In other words, the convenience of the user interface of a software development environment can be improved by the method for providing a software development environment in an embodiment.

A non-transitory computer readable medium according to an embodiment stores a program, for providing a software development environment to develop software by combining a plurality of development components, that when executed by a processor causes the processor to execute operations including displaying a user interface on which are placed a first development component, a connector connected to the first development component, and a second development component to which the first development component is connectable by the connector, and displaying the connector and the second development component in an emphasized display form when a pointer is positioned within a predetermined range from the second development component while the connector is selected by the pointer.

According to the non-transitory computer readable medium that stores the program for providing a software development environment in an embodiment, an environment for developing software by combining a plurality of development components is thus provided. The connector, connected to the first development component, and the second development component are displayed with emphasis when the pointer is positioned within a predetermined range from the second development component while the connector is selected by the pointer. Accordingly, the user can easily recognize that the first development component and the second development component are connectable by the connector. In other words, the convenience of the user interface of a software development environment can be improved by the non-transitory computer readable medium that stores a program for providing a software development environment in an embodiment.

According to the present disclosure, a system for providing a software development environment, a method for providing a software development environment, and a non-transitory computer readable medium that can improve technology related to the user interface of a software development environment can be provided.

### BRIEF DESCRIPTION OF THE DRAWINGS

In the accompanying drawings:
FIG. 1 is a functional block diagram of a system for providing a software development environment according to an embodiment of the present disclosure;
FIG. 2 is a diagram illustrating a user interface in the system for providing a software development environment according to an embodiment of the present disclosure;
FIG. 3 is a diagram illustrating development components having been placed in the user interface in the system for providing a software development environment according to an embodiment of the present disclosure;
FIG. 4 is a flowchart illustrating a method for providing a software development environment according to an embodiment of the present disclosure;
FIG. 5 is a diagram illustrating an overview of operations in the method for providing a software development environment according to an embodiment of the present disclosure;
FIG. 6 is a diagram illustrating an overview of operations in the method for providing a software development environment according to an embodiment of the present disclosure;
FIG. 7 is a diagram illustrating an overview of operations in the method for providing a software development environment according to an embodiment of the present disclosure;
FIG. 8 is a diagram illustrating an example of a highlighted display state;
FIG. 9 is a diagram illustrating an overview of an example predetermined range; and
FIG. 10 is a diagram illustrating an overview of operations in the method for providing a software development environment according to an embodiment of the present disclosure.

### DETAILED DESCRIPTION

A system 10 for providing a software development environment according to an embodiment of the present disclosure is described below with reference to the drawings.

Identical or equivalent portions in the drawings are labeled with the same reference signs. In the explanation of the present embodiment, a description of identical or equivalent portions is omitted or simplified as appropriate.

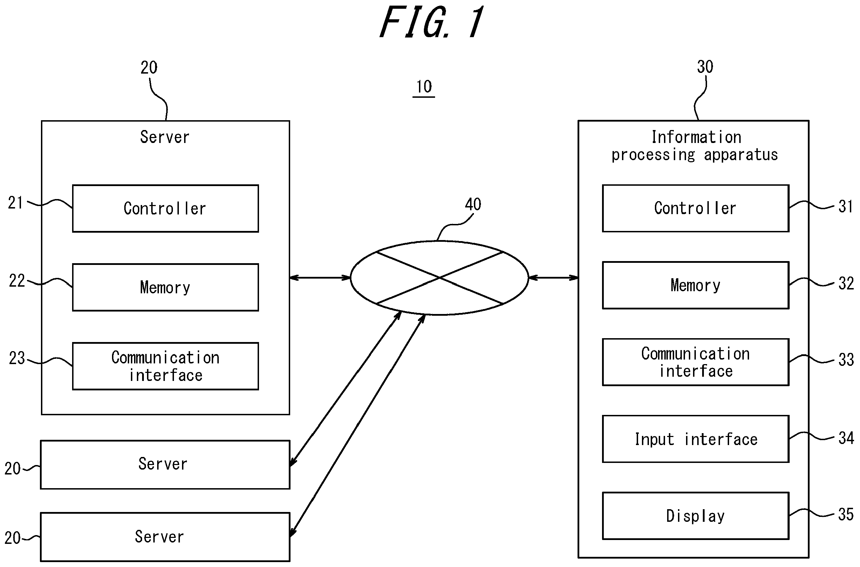

An overview and configuration of the system 10 for providing a software development environment according to the present embodiment are described with reference to FIGS. 1 to 3.

The system 10 for providing a software development environment according to the present embodiment includes a plurality of servers 20 and an information processing apparatus 30. The servers 20 and the information processing apparatus 30 are communicably connected to a network 40, such as a mobile communication network and/or the Internet. Each server 20 is, for example, installed in a data center or the like. Each server 20 is, for example, a server belonging to a cloud computing system or another computing system. In overview, the system 10 for providing a software development environment provides a user with an environment, for example on the cloud, for developing software by combining a plurality of development components. The user operates the information processing apparatus 30 to access the cloud, which is formed by the plurality of servers 20, using a web browser on the information processing apparatus 30, for example. The user can then develop software by combining a plurality of development components on an interface displayed by the web browser. The system 10 for providing a software development environment in FIG. 1 includes three servers 20, but this example is not limiting. The system 10 for providing a software development environment may include fewer than three servers 20 or may include four or more servers 20. The number of servers 20 may also be one.

The configurations of the server 20 and the information processing apparatus 30 according to the present embodiment are described below.

As illustrated in FIG. 1, the server 20 includes a controller 21, a memory 22, and a communication interface 23.

The controller 21 includes at least one processor, at least one dedicated circuit, or a combination thereof. The processor may, for example, be a general-purpose processor, such as a central processing unit (CPU) or graphics processing unit (GPU), or a dedicated processor specialized for particular processing. The dedicated circuit may, for example, be a field-programmable gate array (FPGA) or an application specific integrated circuit (ASIC). The controller 21 executes processing related to operation of the information processing apparatus 30 while controlling each component of the server 20.

The memory 22 includes at least one semiconductor memory, at least one magnetic memory, at least one optical memory, or a combination of at least two of these. The semiconductor memory is, for example, random access memory (RAM) or read only memory (ROM). The RAM is, for example, static random access memory (SRAM) or dynamic random access memory (DRAM). The ROM is, for example, electrically erasable programmable read only memory (EEPROM). The memory 22 functions as, for example, a main memory, an auxiliary memory, or a cache memory. The memory 22 stores data to be used for operation of the server 20 and data resulting from operation of the server 20.

The communication interface 23 includes at least one interface for communication with an external destination. The interface for communication may be an interface for wired communication or wireless communication. In the case of wired communication, the interface for communication may be a local area network (LAN) interface or a universal serial bus (USB), for example. In the case of wireless communication, the interface for communication may be an interface conforming to a mobile communication standard, such as Long Term Evolution (LTE), 4th Generation (4G), or 5th Generation (5G), or an interface conforming to short-range wireless communication such as Bluetooth® (Bluetooth is a registered trademark in Japan, other countries, or both). The communication interface 23 receives data for use in operation of the server 20 and transmits data resulting from operation of the server 20.

The functions of the server 20 are implemented by a processor corresponding to the controller 21 executing a program according to the present embodiment. In other words, the functions of the server 20 are implemented by software. The program causes a computer to function as the server 20 by causing the computer to execute the operations of the server 20. In other words, the computer functions as the server 20 by executing the operations of the server 20 in accordance with the program.

The program according to the present embodiment can be recorded on a computer readable recording medium. Computer readable recording media include non-transitory computer readable recording media, examples of which are a magnetic recording apparatus, an optical disc, a magneto-optical recording medium, and a semiconductor memory. The program is, for example, distributed by the sale, transfer, or lending of a portable recording medium such as a digital versatile disk (DVD) or a compact disk read only memory (CD-ROM) on which the program is recorded. The program may also be distributed by storing the program in the storage of an external server and transmitting the program from the external server to another computer. The program may also be provided as a program product.

A portion or all of the functions of the server 20 may be implemented by a dedicated circuit corresponding to the controller 21. In other words, a portion or all of the functions of the server 20 may be implemented by hardware.

The information processing apparatus 30 includes a controller 31, a memory 32, a communication interface 33, an input interface 34, and a display 35.

The controller 31 includes at least one processor, at least one dedicated circuit, or a combination thereof. The processor may be a general-purpose processor, such as a CPU or GPU, or a dedicated processor specialized for particular processing. The dedicated circuit is, for example, an FPGA or an ASIC. The controller 31 executes processing related to operation of the information processing apparatus 30 while controlling each component of the information processing apparatus 30.

The memory 32 includes at least one semiconductor memory, at least one magnetic memory, at least one optical memory, or a combination of at least two of these. The semiconductor memory is, for example, RAM or ROM. The RAM is, for example, SRAM or DRAM. The ROM is, for example, EEPROM. The memory 32 functions as, for example, a main memory, an auxiliary memory, or a cache memory. The memory 32 stores data to be used for operation of the information processing apparatus 30 and data resulting from operation of the information processing apparatus 30.

The communication interface 33 includes at least one interface for communication with an external destination. The interface for communication may be an interface for wired communication or wireless communication. In the case of wired communication, the interface for communication may be a LAN interface or a USB, for example. In the case of wireless communication, the interface for communication may be an interface conforming to a mobile communication standard, such as LTE, 4G, or 5G, or an interface conforming to short-range wireless communication such as Bluetooth®. The communication interface 33 receives data for use in operation of the information processing apparatus 30 and transmits data resulting from operation of the information processing apparatus 30.

The input interface 34 includes at least one interface for input. The interface for input is, for example, a physical key, a capacitive key, a pointing device, or a touchscreen integrally provided with a display. The input interface 34 receives an operation for inputting data used in operation of the information processing apparatus 30. Instead of being provided in the information processing apparatus 30, the input interface 34 may be connected to the information processing apparatus 30 as an external input device. Any appropriate connection method can be used, such as USB, High-Definition Multimedia Interface (HDMI®) (HDMI is a registered trademark in Japan, other countries, or both), or Bluetooth®.

The display 35 includes at least one interface for display output. The interface for output is, for example, a display. The display may, for example, be a liquid crystal display (LCD) or an organic electro luminescence (EL) display. The display 35 outputs data resulting from operation of the information processing apparatus 30 by displaying the data. Instead of being provided in the information processing apparatus 30, the display 35 may be connected to the information processing apparatus 30 as an external output device. Any appropriate connection method can be used, such as USB, HDMI®, or Bluetooth®.

The functions of the information processing apparatus 30 are implemented by a processor corresponding to the controller 31 executing a program according to the present embodiment. In other words, the functions of the information processing apparatus 30 are implemented by software. The program causes a computer to function as the information processing apparatus 30 by causing the computer to execute the operations of the information processing apparatus 30. In other words, the computer functions as the information processing apparatus 30 by executing the operations of the information processing apparatus 30 in accordance with the program.

The computer in the present embodiment temporarily stores, in the main memory, the program recorded on a portable recording medium or transferred from a server, for example. The computer uses a processor to read the program stored in the main memory and executes processing with the processor in accordance with the read program. The computer may read the program directly from the portable recording medium and execute processing in accordance with the program. Each time the program is received from an external server, the computer may sequentially execute processing in accordance with the received program. Processing may be executed by an application service provider (ASP) type of service that implements functions only via execution instructions and result acquisition, without transmission of the program from an external server to the computer. Examples of the program include an equivalent to the program represented as information provided for processing by an electronic computer. For example, data that is not a direct command for a computer but that has the property of specifying processing by the computer corresponds to the "equivalent to the program".

A portion or all of the functions of the information processing apparatus 30 may be implemented by a dedicated circuit corresponding to the controller 31. In other words, a portion or all of the functions of the information processing apparatus 30 may be implemented by hardware.

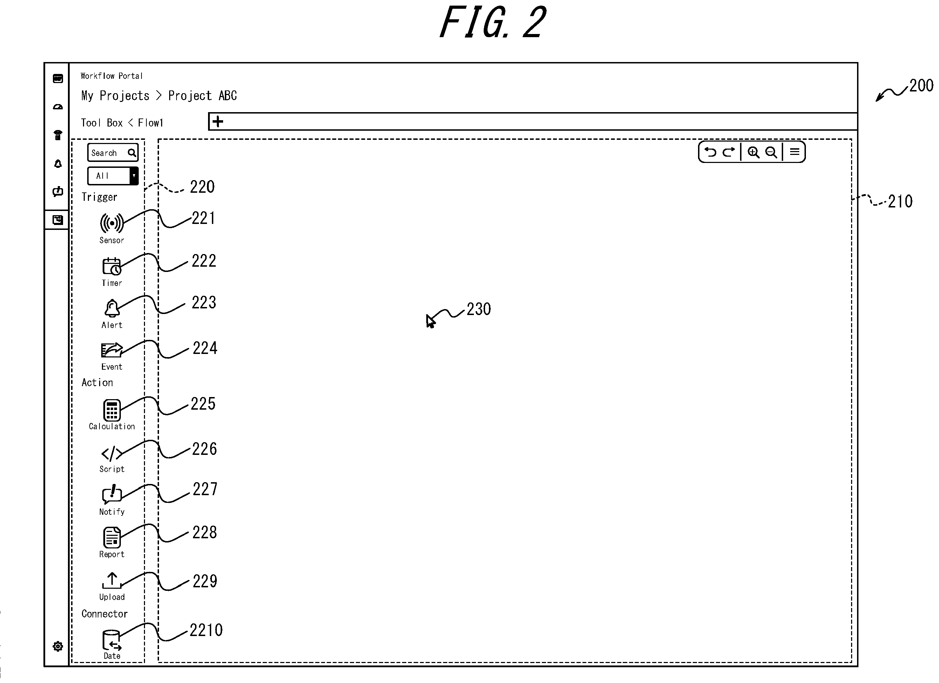

FIG. 2 illustrates an example of a user interface displayed on the display 35 of the information processing apparatus 30. The user operates the input interface 34 of the information processing apparatus 30 to access the server 20 via a web browser, for example. The user then develops software by combining a plurality of development components on the user interface displayed in the web browser. It is thus not necessary in the present embodiment to install an application or the like, on the information processing apparatus 30, that is specialized for the system 10 for providing a software development environment. In other words, as long as the information processing apparatus 30 includes a web browser application, the user can develop software by connecting to the server 20 from the information processing apparatus 30.

The user interface 200 illustrated in FIG. 2 includes a builder area 210 and a development component selection area 220. The builder area 210 is an area for a plurality of development components to be placed, connected, and the like. In other words, the user develops software by combining a plurality of development components in the builder area 210. The development component selection area 220 is an area for displaying a plurality of development components 221 to 230 placeable in the builder area 210.

The development components in the present embodiment are classified into types such as trigger, action, connector, and logic. The development components 221 to 224 illustrated in FIG. 2 are classified as triggers. The development components classified as triggers are components pertaining to the occurrence of some sort of event, such as the acquisition of a sensor value from a temperature sensor, humidity sensor, pressure sensor, or the like, the elapse of a predetermined length of time, or the occurrence of a predetermined alarm on a device. The development components 225 to 229 are classified as actions. The development components classified as actions are components pertaining to an operation, processing, or the like, such as calculation processing, notification, or uploading of data, that is performed when an event occurs. The development component 2210 illustrated in FIG. 2 is classified as a connector. The development components classified as connectors are components pertaining to information processing with an external resource, such as connection to a database, device, or the like and the addition, updating, deletion, etc. of information thereon. The development components classified as logic are components pertaining to the logical sum, filtering, or the like of input information. The user manipulates a pointer 230 using a mouse or the like to develop software on the user interface 200. For example, the user manipulates the pointer 230 to select a desired development component from the development component selection area 220 and then places, connects, etc. the selected, desired development component in the builder area 210.

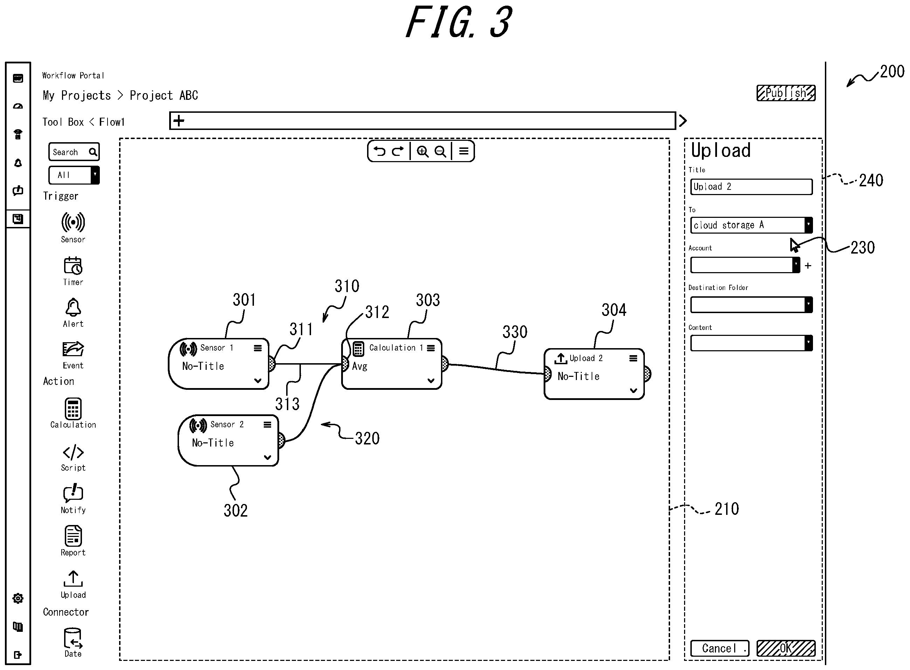

FIG. 3 is an example of a user interface displayed when a plurality of development components has been placed and connected in the builder area 210. The user interface 200 illustrated in FIG. 3 displays software for performing a predetermined calculation (here, for example, the calculation of an average) on sensor values acquired from two sensors and uploading the calculation result. The software is constructed by a plurality of development components 301 to 304. The plurality of development components 301 to 304 illustrated in FIG. 3 is connected by a connector 310, a connector 320, and a connector 330. The connector 310 indicates that the output of the development component 301 is the input of the development component 303. The connector 320 indicates that the output of the development component 302 is the input of the development component 303. The connector 330 indicates that the output of the development component 303 is the input of the development component 304. As illustrated in FIG. 3, the user interface 200 in FIG. 3 includes a property area 240 at a position adjacent to the builder area 210. The property area 240 is an area displaying setting information and the like pertaining to a development component selected in the builder area 210. By selecting and setting various types of variables, conditional expressions, and so forth from pull-down menus or the like in the property area 240, the user defines various actions and the like pertaining to each development component. Use of the user interface 200 enables the user to develop software by placing and connecting development components and setting properties, with no need whatsoever for writing program code.

As described above, the user manipulates the pointer 230 for development on the user interface 200. For example, the user manipulates the pointer 230 with the mouse or the like to select a desired development component from the development component selection area 220 and then places the development component in the builder area 210. The user connects development components placed in the builder area 210 with connectors. Each connector here includes two ends and a line. For example, the connector 310 includes an end 311, an end 312, and a line 313. The end 311 is connected to the development component 301. The other end 312 is connected to the development component 303. The line 313 is a straight line or a curve connecting the end 311 and the end 312. Only the end 311 of the connector 310 is displayed at the stage when the development component 301 is placed in the builder area 210. The user manipulates the pointer 230 using the mouse, for example, to connect the end 311 to the development component 303. The end 312 and the line 313 of the connector 310 are displayed as a result of this operation.

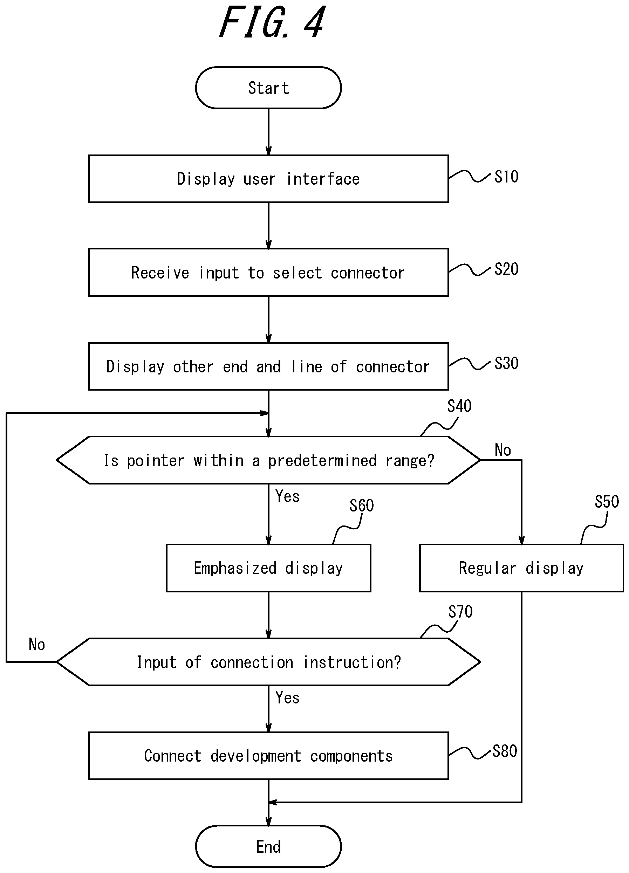

FIG. 4 is a flowchart illustrating operations by the system 10 for providing a software development environment, i.e. an example of a method for providing a software development environment. Here, an example is described of the user performing a drag and drop operation using the mouse to connect a development component among the plurality of development components (first development component) to another development component (second development component) connectable to the first development component.

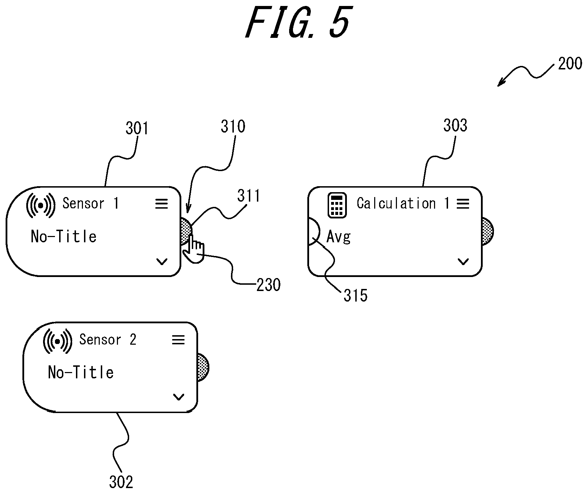

First, the controller 31 of the information processing apparatus 30 displays the user interface 200 on the display 35 (step S10). FIG. 5 is an example of the displayed user interface 200. As described above, the user interface 200 includes the builder area 210 and the development component selection area 220, which displays a plurality of development components placeable in the builder area 210. In FIGS. 5 to 10, only the builder area 210 within the user interface 200 is illustrated. Here, a request to display the user interface 200 is based on an input operation from the user. For example, the controller 31 receives an input operation by the user on the web browser using the input interface 34. Upon receiving the input operation, the controller 31 communicates with the server 20 via the communication interface 33 and receives data pertaining to the user interface 200. The controller 31 then displays the user interface 200 on the display 35 based on the data. An authentication process or the like pertaining to the user may be performed by the server 20 and the information processing apparatus 30 as appropriate.

The user interface 200 in FIG. 5 is displayed at the stage when the development component 301, the development component 302, and the development component 303 have been selected by the user from the development component selection area 220 and placed. As described above, only an end of each connector is displayed at the stage when a development component is placed in the builder area 210. For example, when the development component 301 is placed in the builder area 210, only the end 311 is displayed.

Next, the input interface 34 receives input to select a connector connected to one of the development components 301-303 displayed in the builder area 210 (step S20). For example, the input interface 34 receives input to select the connector 310 connected to the development component 301, i.e. the end 311 of the connector 310. The input to select the connector is, for example, a drag operation by the user using the mouse. The drag operation using the mouse includes an operation to press a button of the mouse and an operation to start movement of the pointer 230 using the mouse.

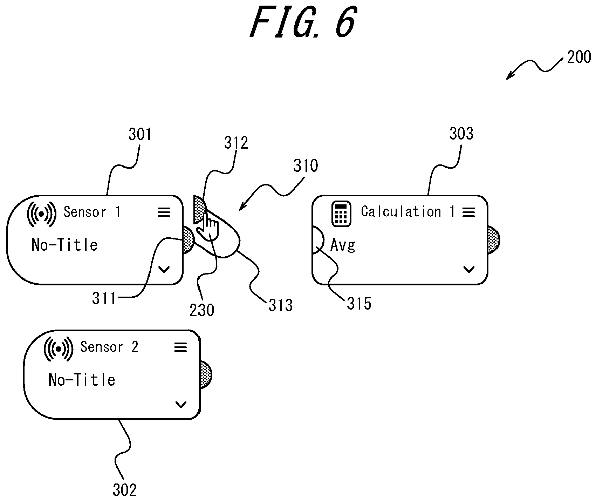

When the input to select the connector is received, the controller 31 displays the other end and the line of the connector on the display 35 (step S30). FIG. 6 illustrates an overview of these operations. As illustrated in FIG. 6, the display 35 displays the end 312 and the line 313 in addition to the end 311 of the connector 310. Here, the end 312 moves in accordance with operation of the pointer 230. The line 313 changes shape so as to connect the end 311 and the end 312. The user moves the pointer 230 with the mouse to connect the end 312 of the connector 310 to the second development component. Here, the development component that is connectable to the first development component, i.e. the second development component, includes a port with a shape corresponding to the shape of the end of the connector. For example, the development component 303 illustrated in FIG. 6 is connectable to the development component 301 and includes a port 315. The shape of the port 315 corresponds to the shape of the end 312 of the connector 310. Specifically, in FIG. 6, the end 312 of the connector 310 has a semicircular shape. The corresponding port 315 has a semicircular shape into which the semicircular end 312 fits.

Subsequently, while the connector 310 is selected by the pointer 230, the controller 31 judges whether the pointer 230 is positioned within a predetermined range from a selectable development component (second development component) (step S40). When the pointer 230 is not positioned within the predetermined range from the selectable development component, the process proceeds to step S50. Conversely, when the pointer 230 is positioned within the predetermined range from the selectable development component, the process proceeds to step S60.

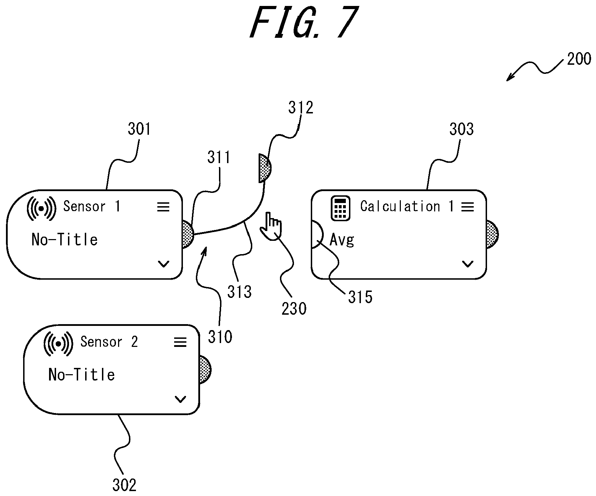

When the pointer 230 is not positioned within the predetermined range from the selectable development component in step S40, the controller 31 displays the connector 310 and the second development component on the display 35 in a regular display form (step S50). FIG. 7 illustrates an example of this regular display form. As illustrated in FIG. 7, the connector 310 and the development component 303 are displayed in the regular display form.

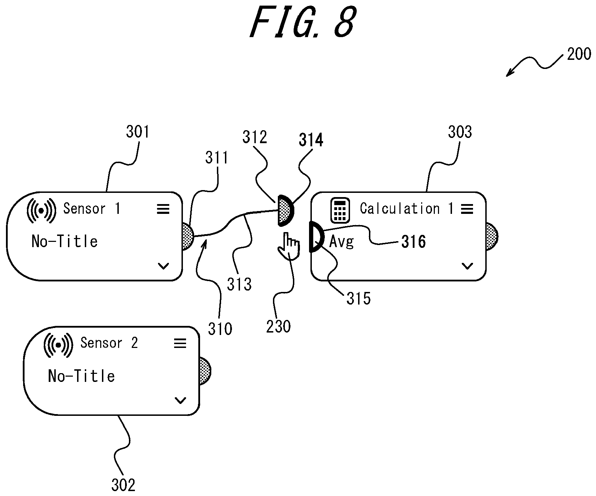

When the pointer 230 is positioned within the predetermined range from the selectable development component in step S40, the controller 31 displays the connector 310 and the second development component on the display 35 in an emphasized display form (step S60). FIG. 8 illustrates an example of the emphasized display form. As illustrated in FIG. 8, the end 312 of the connector 310 is emphasized. Specifically, an arc-shaped frame 314 along the circumference of the semicircular end 312 is displayed with emphasis in FIG. 8. The port 315 of the development component 303 is also emphasized. Specifically, a frame 316 around the port 315 is displayed with emphasis in FIG. 8.

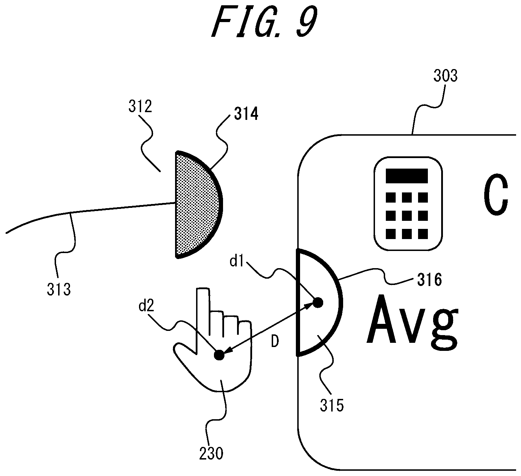

The aforementioned predetermined range is, for example, determined based on the distance from the port of the second development component. FIG. 9 is a diagram illustrating an overview of an example predetermined range pertaining to the development component 303. For example, the predetermined range is determined to be within a predetermined distance (such as Ds) from a central portion d1 of the port 315 of the development component 303. Based on a comparison between Ds and a distance D between the central portion d1 of the port 315 of the development component 303 and a central portion d2 of the pointer 230, it is judged whether the pointer 230 is within the predetermined range. Specifically, the pointer 230 is judged to be outside the predetermined range when the distance D is greater than a threshold Ds. Conversely, the pointer 230 is judged to be within the predetermined range when the distance D is equal to or less than the threshold Ds. The central portion d1 of the port 315 has been described as the reference position for the predetermined range, but this example is not limiting. The reference position of the predetermined range may, for example, be the central portion of the development component.

After step S60, the controller 31 judges whether a connection instruction has been inputted (step S70). The input of the connection instruction is input for connecting the connector to the development component and is, for example, a drop operation by the user using the mouse. The drop operation using the mouse is an operation to release a mouse button. The process proceeds to step S80 when the connection instruction has been inputted. On the other hand, the process returns to step S40 when no connection instruction has been inputted.

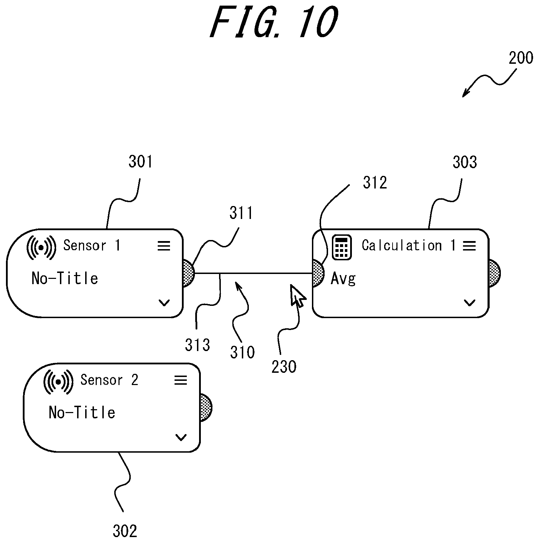

The controller 31 connects and displays, on the display 35, the first development component and the second development component using the connector when a connection instruction has been inputted in step S70 (step S80). FIG. 10 illustrates an overview of these operations. As illustrated in FIG. 10, the end 312 of the connector 310 fits into the port 315 of the development component 303, and the development components 301 and 303 are connected.

In this way, according to the system 10 for providing a software development environment in the present embodiment, when the pointer 230 is positioned within a predetermined range from the development component 303 while the connector 310 connected to the development component 301 is selected by the pointer 230, the connector 310 and the development component 303 are displayed with emphasis. Accordingly, the user can easily recognize that the first development component 301 and the second development component 303 are connectable by the connector 310. In other words, the convenience of the user interface of a software development environment can be improved by the system 10 for providing a software development environment of the present embodiment.

According to the system 10 for providing a software development environment in the present embodiment, the second development component 303 includes the port 315 that has a shape corresponding to the shape of the end 312 of the connector 310, as illustrated in FIG. 8. In the display form according to the aforementioned display with emphasis, the end 312 and the port 315 are displayed with emphasis. The corresponding shape and the display with emphasis enable the user to recognize more easily that the first development component and the second development component are connectable by the connector.

According to the system 10 for providing a software development environment in the present embodiment, when input of the connection instruction is received while the connector 310 and the second development component 303 are displayed with emphasis, the development component 301 and the development component 303 are connected by the connector 310. The user can therefore perform the connection operation while recognizing that the first development component 301 and the second development component 303 are connectable by the connector 310. This can improve convenience for the user. It suffices to input the connection instruction when the pointer 230 is positioned within a predetermined range from the second development component 303. The user therefore does not need to match the pointer 230 precisely to the connection position of the second development component 303 (such as the position of the port 315). This can improve operability for the user.

Although the present disclosure is based on embodiments and drawings, it is to be noted that various changes and modifications will be apparent to those skilled in the art based on the present disclosure. Therefore, such changes and modifications are to be understood as included within the scope of the present disclosure. For example, the functions and the like included in the components, steps, and the like may be reordered in any logically consistent way. Furthermore, components, steps, and the like may be combined into one or divided.

For example, in the present embodiment, the end of the connector has been described as semicircular, and the corresponding port as a semicircular recess into which the semicircular end fits, but this example is not limiting. For example, the end of the connector may have any appropriate shape, such as a triangle, a rhombus, an arrow, a polygon, or a projection. The end of the connector may also have a plurality of types of shapes. In this case, a port to which a connector is connectable may have a shape into which the connector fits. A port to which a connector is not connectable may have a shape into which the connector does not fit. In other words, a port to which a certain connector is not connectable may have a different shape from a port to which the connector is connectable. This configuration thus enables the user to more easily recognize the development components to which a connector can and cannot be connected. This configuration can also prevent program bugs caused by the connection relationship between development components and can facilitate debugging. Furthermore, when a pointer is brought close to a non-connectable port while a connector is selected, the display may be emphasized in a different form than the emphasized display of a connectable port (first emphasized display). In other words, when the pointer 230 is positioned within a predetermined range from a port to which a connector is not connectable while the connector is selected by the pointer 230, the controller 31 may display the end of the connector and the non-connectable port on the display 35 with emphasis in a different form (second emphasized display) than the first emphasized display. The second emphasized display can be any appropriate form. For example, when the end of the connector is semicircular and the port is triangular, an arc-shaped frame along the circumference of the semicircular end may be displayed with emphasis, and a triangular frame around the port may be displayed with emphasis. Alternatively, in the second emphasized display, the display may be emphasized with a different color than the first emphasized display. Such display using the second emphasized display that differs from the first emphasized display enables the user to recognize more easily that the connector and the port are not connectable. This configuration can also prevent program bugs caused by the connection relationship between development components and can facilitate debugging.

The frame 314 and the frame 316 displayed with emphasis may, for example, be an identical color. For example, the color may be a bright display color (such as blue, red, or yellow). In other words, the emphasized displays may correspond so that the end 312 of the connector and the port 315 are displayed with emphasis in the same color. The end of the connector and the port are thereby displayed with emphasis in the same color, enabling the user to recognize more easily that the first development component and the second development component are connectable by the connector. The form of the emphasized display (first emphasized display) is not limited to this example. For example, the display may be emphasized by appropriately changing any parameter such as brightness, the shade of the display color, contrast, or a combination thereof. Apart from changing these parameters, the display may also be emphasized by any form that stands out visually as compared to other objects. Similarly, the form of the second emphasized display is not limited to the aforementioned example. For example, the display may be emphasized by appropriately changing any parameter such as brightness, the shade of the display color, contrast, or a combination thereof. Apart from changing these parameters, the display may also be emphasized by any form that stands out visually as compared to other objects.

In the present embodiment, the second development component includes one port, but this example is not limiting. The second development component may include two or more ports. In this case, a connector is connectable to each of the two or more ports. When the position of the pointer 230 is within a predetermined range from any of the ports, the port to which the pointer 230 is closest and the end of the connector may be displayed with emphasis. This enables the user to easily recognize the port to which the connector is to be connected.

In the present embodiment, the pointer 230 is manipulated by a mouse in FIGS. 4 to 10, but this example is not limiting. For example, the pointer 230 may be manipulated by a physical key, a capacitive key, a pointing device other than a mouse, a touchscreen provided integrally with a display, or the like.

The information processing apparatus 30 has been described as accessing the server 20 via a web browser in the present embodiment to provide the user with a software development environment, but this example is not limiting. For example, an application according to the system 10 for providing a software development environment may be installed on the information processing apparatus 30, and a software development environment may be provided to the user by communication with the server 20 via the application.

## Claims

1. A system (10) for providing a software development environment to develop software by combining a plurality of development components, the system comprising an information processing apparatus (30) that includes a display (35) and a controller (31), wherein
the display (35) is configured to display a user interface (200) on which are placed a first development component (301), a connector (310) connected to the first development component (301), and a second development component (303) to which the first development component (301) is connectable by the connector (310), and
the controller (31) is configured to display the connector (310) and the second development component (303) on the display (35) in an emphasized display form when a pointer (230) is positioned within a predetermined range from the second development component (303) while the connector (310) is selected by the pointer (230).

2. The system (10) for providing a software development environment of claim 1, wherein the second development component (303) includes one or more ports (315) having a shape corresponding to a shape of an end (311, 312) of the connector (310), the end (311, 312) is connectable to the one or more ports (315), and in the display form, the end (311, 312) of the connector (310) and one port (315) among the one or more ports (315) are displayed with emphasis.

3. The system (10) for providing a software development environment of claim 2, wherein the controller (31) is configured to display the end (311, 312) of the connector (310) and a port (315) to which the connector (310) is not connectable on the display (35) with emphasis in a different form than the display form when the pointer (230) is positioned within a predetermined range from the port (315) to which the connector (310) is not connectable while the connector (310) is selected by the pointer (230).

4. The system (10) for providing a software development environment of claim 2 or 3, wherein a port (315) to which the connector (310) is not connectable has a different shape from a port (315) to which the connector (310) is connectable.

5. The system (10) for providing a software development environment of any one of claims 2 to 4, wherein in the display form, the end (311, 312) and one port (315) among the one or more ports (315) are displayed with emphasis in an identical color.

6. The system (10) for providing a software development environment of any one of claims 2 to 5, wherein the controller (31) is configured to connect and display, on the display (35), the first development component (301) and the second development component (303) using the connector (310) when input of a connection instruction is received while the connector (310) and the second development component (303) are displayed in the display form.

7. A method for providing a software development environment to develop software by combining a plurality of development components, the method comprising:
displaying a user interface (200) on which are placed a first development component (301), a connector (310) connected to the first development component (301), and a second development component (303) to which the first development component (301) is connectable by the connector (310); and
displaying the connector (310) and the second development component (303) in an emphasized display form when a pointer (230) is positioned within a predetermined range from the second development component (303) while the connector (310) is selected by the pointer (230).

8. The method for providing a software development environment of claim 7, wherein
the second development component (303) includes one or more ports (315) having a shape corresponding to a shape of an end (311, 312) of the connector (310),
the end (311, 312) is connectable to the one or more ports (315), and
the method for providing a software development environment further comprises displaying, in the display form, the end (311, 312) of the connector (310) and one port (315) among the one or more ports (315) with emphasis.

9. The method for providing a software development environment of claim 8, further comprising displaying the end (311, 312) of the connector (310) and a port (315) to which the connector (310) is not connectable with emphasis in a different form than the display form when the pointer (230) is positioned within a predetermined range from the port (315) to which the connector (310) is not connectable while the connector (310) is selected by the pointer (230).

10. The method for providing a software development environment of claim 8 or 9, further comprising displaying, in the display form, the end (311, 312) and one port (315) among the one or more ports (315) with emphasis in an identical color.

11. The method for providing a software development environment of any one of claims 8 to 10, further comprising connecting and displaying the first development component (301) and the second development component (303) using the connector (310) when input of a connection instruction is received while the connector (310) and the second development component (303) are displayed in the display form.

12. A non-transitory computer readable medium storing a program, for providing a software development environment to develop software by combining a plurality of development components, that when executed by a processor causes the processor to execute operations comprising:
displaying a user interface (200) on which are placed a first development component (301), a connector (310) connected to the first development component (301), and a second development component (303) to which the first development component (301) is connectable by the connector (310); and
displaying the connector (310) and the second development component (303) in an emphasized display form when a pointer (230) is positioned within a predetermined range from the second development component (303) while the connector (3 10) is selected by the pointer (230).

13. The non-transitory computer readable medium of claim 12, wherein
the second development component (303) includes one or more ports (315) having a shape corresponding to a shape of an end (311, 312) of the connector (310),
the end (311, 312) is connectable to the one or more ports (315), and
the program for providing a software development environment causes the processor to execute operations further comprising displaying, in the display form, the end (311, 312) of the connector (310) and one port (315) among the one or more ports (315) with emphasis.

14. The non-transitory computer readable medium of claim 13, wherein the program for providing a software development environment causes the processor to execute operations further comprising displaying the end (311, 312) of the connector (310) and a port (315) to which the connector (310) is not connectable with emphasis in a different form than the display form when the pointer (230) is positioned within a predetermined range from the port (315) to which the connector (310) is not connectable while the connector (310) is selected by the pointer (230).

15. The non-transitory computer readable medium of claim 13 or 14, wherein the program for providing a software development environment causes the processor to execute operations further comprising displaying, in the display form, the end (311, 312) and one port (315) among the one or more ports (315) with emphasis in an identical color.
